# EUROPÄISCHE PATENTSCHRIFT

(11) **EP 1 014 072 B1**
(45) Veröffentlichungstag und Bekanntmachung des Hinweises auf die Patenterteilung: **28.03.2007**
(21) Anmeldenummer: 99124111.8
(22) Anmeldetag: 02.12.1999
(51) Int. Cl.: G01M 15/00

(54) **Verfahren zur Zylinder vergleichenden Prüfung von Einspritz-Verbrennungsmotoren, insbesondere Kraftfahrzeugmotoren**
Cylinder comparing test procedure for combustion engines with injection, in particular for vehicle engines
Procédé d'essai par comparaison de cylindres de moteurs à combustion interne à injection, en particulier de moteurs de véhicules

(30) Priorität: 21.12.1998 DE 19859004
(43) Veröffentlichungstag der Anmeldung: 28.06.2000
(73) Patentinhaber: ROBERT BOSCH GMBH, 70442 Stuttgart (DE)
(72) Erfinder: Fischer, Uwe, 71409 Schwaikheim (DE)

(56) Entgegenhaltungen:
- US-A- 4 328 546
- US-A- 4 625 546

## Beschreibung

### Stand der Technik

Die Erfindung geht aus von einem Verfahren zur Zylinder vergleichenden Prüfung von Einspritz-Verbrennungsmotoren, insbesondere Kraftfahrzeugmotoren, bei denen der Motor von einer elektronischen Motorsteuerung gesteuert wird, die mit Eigendiagnosemitteln und einer Anschlußschnittstelle versehen ist, der im Oberbegriff des Anspruchs 1 definierten Gattung, sowie einer Anordnung zur Durchführung des bzw. der erfindungsgemäßen Verfahren.

In der EP 0 523 074 B1 ist eine Vorrichtung zur Erzeugung eines Triggersignals aus Zündimpulsen einer Zündanlage beschrieben, die auch dann ein Triggersignal erzeugt, wenn Zündimpulse unterdrückt werden. In dieser Patentschrift ist erwähnt, daß für bestimmte Messungen an einer Brennkraftmaschine, beispielsweise Kompressionsmessungen mit Hilfe des Anlasserstroms sowie Leistungs- und Laufruhemessungen, die Unterdrückung einzelner oder mehrere Zündauslösungen in Folge erforderlich sind. Hierzu ist eine Kurzschließanordnung vorgesehen, die einen steuerbaren Schalter, insbesondere einen Tyrister enthält, der entsprechend zum richtigen Zeitpunkt leitend geschaltet wird, so daß der Primärkreis einer Zündspule kurzgeschlossen wird. Der wesentliche Kern dieser Patentschrift besteht darin, Triggersignale, die den Zündimpulsen entsprechen auch dann zur Verfügung zu stellen, wenn Zündimpulse unterdrückt sind. Dies ist jedoch nicht Gegenstand vorliegender Erfindung.

Bei der Untersuchung und Prüfung von Einspritz-Verbrennungsmotoren, insbesondere Kraftfahrzeugmotoren, besteht eine aussagekräftige Messung darin, eine Zylinder vergleichende Messung durchzuführen, bei welcher selektiv die Zündung jedes einzelnen Zylinders unterdrückt wird. Durch einen Vergleich des Drehzahlabfalls kann beispielsweise der Leistungsanteil der Zylinder zumindest qualitativ verglichen werden. Dadurch sind Rückschlüsse auf mechanische Fehler, wie beispielsweise Undichtigkeiten, möglich. Bei einer weiteren Prüfung ist ein indirekter Vergleich der Verbrennungsqualität möglich, indem ein Vergleich der Anteile an unverbrannten Kohlenwasserstoffen gemacht wird. Diese sehr einfach und schnell durchführbaren Prüfungen ermöglichen oft einen Verzicht auf sehr aufwendige mechanische Kompressionsmessungen am Motor.

Bei modernen Einspritz-Verbrennungsmotoren, bei denen der Motor von einer elektronischen Motorsteuerung gesteuert wird, die mit Eigendiagnosemitteln und einer Anschlußschnittstelle, über welche die Motorsteuerung an ein externes Testgerät anschließbar ist, versehen sind, ist die Durchführung dieser Prüfungen und Untersuchungen nicht möglich. Dies liegt daran, daß moderne elektronische Motorsteuerungen eine Leerlaufdrehzahlregelung enthalten, welche die Drehzahl auch bei Ausfall eines Zylinders konstant hält. Weiterhin ist oft eine Fehlzündungserkennung vorhanden, welche die Einspritzung in die kurzgeschlossenen Zylinder nach Erkennen der unterdrückten Zündung abschaltet, was beispielsweise in USA eine gesetzliche Forderung ist. Weiterhin muß auf den Katalysator Rücksicht genommen werden, denn der Motor sollte nicht zu heiß sein.

Aufgabe vorliegender Erfindung ist es, einen Weg anzugeben, daß diese vorstehend genannten einfachen Prüfungen auf Leistungsvergleich der Zylinder und Anteil auf unverbrannte Kohlenwasserstoffe auch bei Motoren möglich sind, die mit einer modernen elektronischen Motorsteuerung versehen sind.

### Vorteile der Erfindung

Das erfindungsgemäße Verfahren zur Zylinder vergleichenden Prüfung von Einspritz-Verbrennungsmotoren mit den kennzeichnenden Merkmalen des Anspruchs 1 bzw. mit den kennzeichnenden Merkmalen des Anspruchs 4 hat gegenüber dem Stand der Technik den Vorteil, daß Wege und Verfahrensschritte zur Verfügung gestellt werden, durch welche diese bekannten Zylinder vergleichenden Prüfungen hinsichtlich Leistungsabfall und Verbrennungsqualität jedes Zylinders auf einfache und zeitsparende Weise möglich sind. Damit ist die Möglichkeit gegeben, auch bei Verwendung von modernster elektronischer Motorsteuerung in der Praxis wohl bekannte und einfach durchzuführende Prüfungen möglich sind, die zeitsparend auf den Zustand des Motors und seine Zylinder schließen lassen, ohne daß aufwendige mechanische Kompressionsmessungen von Anfang an erforderlich sind.

Gemäß der Erfindung wird dies prinzipiell dadurch erreicht, daß zum einen aus dem gemessenen und anzeigbaren jeweiligen Drehzahlabfall bei Zündungs- oder Einspritzunterdrückung des jeweiligen Zylinders oder zum anderen aus den gespeicherten auslesbaren und anzeigbaren Einspritz-Korrekturwerten jedes Zylinders auf einen möglichen Leistungsabfall des jeweiligen Zylinders schließbar ist. Dazu ist die elektronische Motorsteuerung über ihre Anschlußschnittstelle mit einem externen Testgerät verbunden.

Alternativ dazu ist prinzipiell bei der Prüfung auf die Verbrennungsqualität jedes Zylinders vorgesehen, daß aus dem gemessenen und anzeigbaren jeweiligen Anteil von unverbrannten Kohlenwasserstoffen bei Zündungs- oder Einspritz-Unterdrückung des jeweiligen Zylinders auf ein mögliches Defizit der Verbrennungsqualität des jeweiligen Zylinders schließbar ist. Auch hier ist die elektronische Motorsteuerung über eine Anschlußschnittstelle mit einem externen Testgerät verbunden.

Durch die in den abhängigen Ansprüchen jeweils niedergelegten Maßnahmen sind vorteilhafte Weiterbildungen und Verbesserungen der in den unabhängigen Ansprüchen 1 und 4 angegebenen Verfahren möglich.

Entsprechend einer besonders zweckmäßigen und vorteilhaften Ausgestaltung des erfindungsgemäßen Verfahrens zur Leistungsbestimmung der Zylinder ist vorgesehen, daß bei dem gemessenen und anzeigbaren jeweiligen Drehzahlabfall bei Zündungs- oder Einspritz-Unterdückung des jeweiligen Zylinders die Prüfung vom Testgerät her gestartet wird und der Motorsteuerung über die Anschlußschnittstelle nachfolgende Schritte als Vorgaben vorgegeben wird:
a. Einhaltung einer bestimmten Bezugsdrehzahl,
b. Einhaltung gleicher Einspritzmengen je Zylinder,
c. Einhaltung gleicher Zündparameter, wie insbesonders gleiche Zündzeitpunkte und Zündwinkel,
d. Unterbrechung der Zündung oder Einspritzung an einem ersten Zylinder,
e. Aufhebung der Zünd- oder Einspritz-Unterbrechung an dem ersten Zylinder,
f. Wiederholung der Schritte d. und e. für alle weiteren Zylinder des Motors,
g. Beendigung des Prüfvorgangs,
und daraus im Testgerät der Drehzahlabfall jedes Zylinders gegenüber der Bezugsdrehzahl ermittelt und die Anzeige durch das Testgerät vorgenommen wird.

In modernsten elektronischen Motorsteuerungen, wie beispielsweise in der als "Motronik" auf dem Markt befindlichen Motorsteuerung, wird während des Betriebs ein Vergleich der Leistungsbeiträge der Zylinder anhand einer hoch auflösenden Drehzahlmessung durchgeführt. Die Ergebnisse aus dieser Messung werden dazu verwendet, die Einspritzmengen in die einzelnen Zylinder derart anzupassen, daß alle Zylinder einen identischen Leistungsbeitrag liefern. In den Eigendiagnosemitteln der Motorsteuerung werden diese Korrekturwerte gespeichert, um sie für die Steuerung zu verwenden. In einem solchen Fall ist die Durchführung einer besonderen Prüfung hinsichtlich der Leistungsbeurteilung je Zylinder nicht notwendig, da aus den in der Motorsteuerung vorliegenden Korrekturwerten die gewünschte Aussage gewonnen werden kann.

Dementsprechend besteht eine besondere Ausgestaltung des im unabhängigen Anspruch 1 vorgesehenen Verfahrens darin, daß bei Prüfung mittels der gespeicherten und angezeigten Einspritz-Korrekturwerte jedes Zylinders, diese Korrekturwerte vom Testgerät über die Anschlußschnittstelle aus der Motorsteuerung ausgelesen und im Testgerät, gegebenenfalls nach Aufbereitung und Normierung auf eine geeignete Bezugsgröße, die Auswertung im Hinblick auf den Leistungsbeitrag jedes Zylinders erfolgt und die Anzeige durch das Testgerät in geeigneter Form vorgenommen wird.

Entsprechend einer vorteilhaften Weiterbildung und Ausgestaltung des erfindungsgemäßen Verfahrens zur Ermittlung der Verbrennungsqualität im Zylinder ist vorgesehen, daß die Prüfung vom Testgerät her gestartet wird und der Motorsteuerung über die Anschlußschnittstelle nachfolgende Schritte als Vorgaben vorgegeben wird:
a. Einhaltung einer bestimmten Bezugsdrehzahl,
b. Einhaltung gleicher Einspritzmengen je Zylinder,
c. Einhaltung gleicher Zündparameter, wie insbesonders gleiche Zündzeitpunkte und Zündwinkel,
d. Unterbrechung der Zündung oder Einspritzung an einem ersten Zylinder,
e. Aufhebung der Zünd- oder Einspritz-Unterbrechung an dem ersten Zylinder,
f. Wiederholung der Schritte d. und e. für alle weiteren Zylinder des Motors,
g. Beendigung des Prüfvorgangs, und daraus im Testgerät der jeweilige Anteil von unverbrannten Kohlenwasserstoffen jedes Zylinders gegenüber einem Bezugswert ermittelt und die Anzeige durch das Testgerät vorgenommen wird.

In weiterer Ausgestaltung dieses Verfahrens ist vorgesehen, daß die Ermittlung des Anteils unverbrannter Kohlenwasserstoffe aus den Auspuffgasen oder durch Auswertung eines Signals der Lambdasonde erfolgt und die Zuordnung zu den einzelnen Zylindern im Testgerät vorgenommen wird.

Entsprechend einer weiteren sehr vorteilhaften Ausgestaltung aller erfindungsgemäß vorgeschlagenen Verfahren ist vorgesehen, daß jedes Verfahren durch entsprechenden Programmcode im Testgerät und in der elektronischen Motorsteuerung realisiert ist.

Die Erfindung sieht in einer besonders zweckmäßigen Anordnung zur Durchführung des bzw. der erfindungsgemäß gestalteten Verfahren vor, daß ein entsprechend programmiertes Testgerät vorgesehen ist, welches an die Anschlußschnittstelle einer entsprechend programmierten elektronischen Motorsteuerung anschließbar ist, und daß die Durchführung der Prüfverfahren vom Testgerät her einleit- und startbar ist.

### Zeichnung

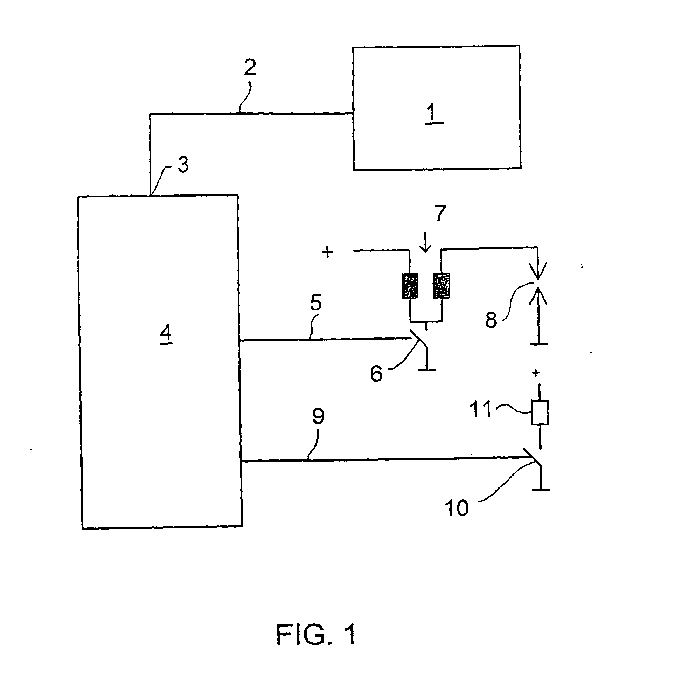

Die Erfindung wird anhand eines in der Zeichnung dargestellten Ausführungsbeispieles in der nachfolgenden Beschreibung näher erläutert, wobei die einzige Figur 1 schematisch den Aufbau der erfindungsgemäßen Anordnung für die Durchführung der verschiedenen erfindungsgemäß gestalteten Verfahren zeigt.

### Beschreibung der Ausführungsbeispiele

Fig. 1 zeigt schematisch die erfindungsgemäße Anordnung zur Durchführung der verschiedenen Verfahren, die gemäß der Erfindung gestaltet sind. Ein externes Testgerät 1 ist über eine Leitung 2 mit der Anschlußschnittstelle 3 einer elektronischen Motorsteuerung 4 verbunden. Über eine Leitung 5 wird ein Schalter 6 gesteuert, um eine Zündspule 7 an die positive Versorgungsspannung zu legen, damit eine Zündkerze 8 mit Energie versorgt wird. Dabei kann dann auch die Steuerung so erfolgen, daß eine Zündung zum gewünschten Zeitpunkt durch Offenlassen bzw. Nicht-Ansteuern des Schalters 6 unterdrückt wird. Weiterhin wird über eine Leitung 9 von der Motorsteuerung 4 her ein Schalter 10 betätigt, um ein Einspritzventil 11 zu betätigen. Auch hier kann, gesteuert von der Motorsteuerung 4 her, das Anlegen des Einspritzventils 11 an positive Spannung unterbrochen werden, damit keine Betätigung des zugehörigen Ventils erfolgt und somit im zugeordneten Zylinder kein Leistungsbeitrag durch Verbrennung stattfindet.

Das Testgerät 1 und die elektronische Motorsteuerung 4 sind jeweils mit einem Computer oder Mikroprozessor versehen, der mit einem Programmcode ausgestattet ist, mit dessen Hilfe die erfindungsgemäßen Verfahren durchgeführt werden können. Üblicher Weise wird der Start der einzelnen Prüfverfahren vom Testgerät 1 her gestartet und in Zusammenarbeit mit der Motorsteuerung 4 durchgeführt. Die Motorsteuerung 4 ist üblicher Weise bei modernen Steuerungen mit Eigendiagnosemitteln versehen und die Anschlußschnittstelle 3 wird oft als Diagnoseschnittstelle bezeichnet, über die das Testgerät 1 anschließbar ist, um die Prüfungen durchzuführen und Fehlermeldungen, die in den Eigendiagnosemitteln gespeichert sind, auszulesen.

Entsprechend der grundlegenden Idee vorliegender Erfindung wird die Möglichkeit geschaffen, trotz einiger eigentlich den verschiedenen Verfahren entgegenstehenden Eigenschaften moderner elektronischer Motorsteuerungen doch wieder altbewährte Prüfungen in Zylinder vergleichender Weise durchführen zu können, ohne gleich aufwendige mechanische Kompressionsmessungen, die in die Zündkerzenöffnungen eingesetzt werden, anwenden zu müssen. Dazu wird in geeigneter Weise auf die Motorsteuerung 4 vom Testgerät 1 her eingewirkt, um zum geeigneten Zeitpunkt eine Unterbrechung der Zündung an der Zündkerze 8 und/oder eine Unterbrechung der Kraftstoffzufuhr über das Einspritzventil 11 zu vermeiden. Dadurch wird in gesteuerter Weise eine Zündunterbrechung und/oder eine Einspritz-Unterbrechung für jeden gewünschten Zylinder nacheinander durchgeführt. Gemessen und ausgewertet wird dabei zum einen auf den Leistungsabfall hin durch Anzeige des jeweiligen Drehzahlabfalls oder durch Messung des Anteils auf unverbrannten Kohlenwasserstoff im Auspuffgas der dem jeweiligen Zylinder zugeordnet wird. Dadurch wird einmal auf den Leistungsbeitrag jedes einzelnen Zylinders geschlossen bzw. auf die Verbrennungsqualität jedes einzelnen Zylinders.

Bei besonders gestalteten Motorsteuerungen jüngster Bauart ist vorgesehen, daß während des Betriebes ein Vergleich der Leistungsbeiträge der Zylinder anhand einer hochauflösenden Drehzahlmessung durchgeführt wird. Die Ergebnisse aus dieser Drehzahlmessung werden dazu verwendet, die Einspritzmengen in die einzelnen Zylinder derart anzupassen, daß alle Zylinder einen identischen Leistungsbeitrag liefern. In den Eigendiagnosemitteln einer derart gestalteten Motorsteuerung werden die Korrekturwerte für die einzelnen Zylinder festgehalten. Diese liegen dann meist in unterschiedlich langen Öffnungs- bzw. Einschaltzeiten der einzelnen Einspritzventile vor. Diese Korrekturwerte können entsprechend einem Ausführungsbeispiel der Erfindung aus der Motorsteuerung 4 ausgelesen und in das Testgerät 1 eingelesen und dort angezeigt werden. Gegebenenfalls wird nach entsprechender Aufbereitung und Normierung auf eine geeignete Bezugsgröße die Auswertung im Hinblick auf den Leistungsbeitrags jedes Zylinders durchgeführt und eine entsprechende Anzeige auf dem Testgerät in geeigneter Form durchgeführt.

Falls die Motorsteuerung nicht diese Eigenschaften der Regelung auf identische Leistung jedes Zylinders enthält, wird über die Zusammenarbeit des entsprechend programmierten Testgeräts und der entsprechend programmierten Motorsteuerung aus dem gemessenen und jeweils anzeigbaren Drehzahlabfall bei Unterdrückung der Zündung bzw. Unterdrückung der Einspritzung des jeweiligen Zylinders auf dessen Leistungsbeitrag geschlossen. Dabei ist der Drehzahlabfall während der Unterdrückung der Zündung bzw. der Einspritzung eines Zylinders ein Maß für den Leistungsbeitrag dieses Zylinders. Ist beispielsweise der Drehzahlabfall eines Zylinders gering gegenüber der vorgegebenen Bezugsdrehzahl, dann läßt sich daraus schließen, daß sein Leistungsbeitrag gering ist. Ist der Drehzahlabfall eines Zylinders entsprechend hoch, dann bringt der zugehörige Zylinder die gewünschte Leistung.

Entsprechend einem besonderen Ausführungsbeispiel der Erfindung, der einen gewissen Programmcode in der Motorsteuerung 4 und im Testgerät 1 erforderlich macht, wird bei dem gemessenen und anzeigbaren jeweiligen Drehzahlabfall bei Zündungs- oder Einspritzunterdrückung des jeweiligen Zylinders die Prüfung vom Testgerät 1 her gestartet. Der Motorsteuerung 4 werden dabei über die Anschlußschnittstelle 3 und die zugehörige Leitung 2 nachfolgende Schritte als Vorgaben vorgegeben:
a. Einstellen und Einhalten einer bestimmten Bezugsdrehzahl,
b. Einhalten gleicher Einspritzmengen je Zylinder,
c. Einhalten gleicher Zündparameter, wie insbesondere gleiche Zündzeitpunkte und Zündwinkel,
d. Unterbrechung der Zündung oder Einspritzung an einem ersten Zylinder,
e. Aufheben der Zünd- oder Einspritzunterbrechung an dem ersten Zylinder,
f. Wiederholung der Schritte d. und e. für alle weiteren Zylinder des Verbrennungsmotors,
g. Beendigung des Prüfvorgangs.

In dem Testgerät 1 wird daraus das Prüfergebnis ermittelt, und zwar der Drehzahlabfall jedes Zylinders gegenüber der Bezugsdrehzahl. Die gewonnenen Werte werden auf dem Testgerät 1 entsprechend angezeigt. Sie sind natürlich selbstverständlich auch speicherbar und können auch ausgedruckt werden.

In ähnlicher Weise wird verfahren bei der Ermittlung der Verbrennungsqualität jedes Zylinders. Auch dazu wird die Prüfung vom Testgerät 1 her gestartet und der Motorsteuerung 4 über die Leitung 2 und die Anschlußschnittstelle 3 die nachfolgenden Schritte bzw. Befehle als Vorgaben vorgegeben:
a. Einstellen und Einhalten einer bestimmten Bezugsdrehzahl,
b. Einhalten gleicher Einspritzmengen je Zylinder,
c. Einhalten gleicher Zündparameter, wie insbesondere gleiche Zündzeitpunkte und Zündwinkel,
d. Unterbrechung der Zündung oder Einspritzung an einem ersten Zylinder,
e. Aufheben der Zünd- oder Einspritzunterbrechung an dem ersten Zylinder,
f. Wiederholung der Schritte d. und e. für alle weiteren Zylinder des Verbrennungsmotors,
g. Beendigung des Prüfvorgangs.

Daraus wird im Testgerät 1 der jeweilige Anteil von unverbrannten Kohlenwasserstoffen jedes Zylinders über einen Bezugswert ermittelt und die Anzeige durch das Testgerät 1 vorgenommen. Die Ermittlung des Anteils unverbrannter Kohlenwasserstoffe erfolgt durch Überprüfung der Auspuffgase oder durch die Auswertung eines Signals der Lambdasonde. Die Ergebnisse werden im Testgerät den einzelnen Zylindern zugeordnet und es wird eine entsprechende Anzeige vorgenommen. Auch hier kann wiederum eine Speicherung und gegebenenfalls ein Ausdruck vorgenommen werden.

Wie bereits dargestellt, erfolgt die Auswertung des Prüfungsablaufs sinnvoller Weise im Testgerät 1. Denkbar ist jedoch auch, daß eine komplette Implementierung des Prüfablaufs in der Motorsteuerung selbst mit Anzeige des Ergebnisses bzw. der Ergebnisse im Fahrzeug erfolgt oder daß eine Ausgabe des Prüfergebnisses über die Diagnoseschnittstelle bzw. Anschlußschnittstelle 3 erfolgt. Dabei könnte der Prüfungsablauf über den Bordcomputer gesteuert werden.

Die Erfindung gestattet in vorteilhafter Weise, daß die wichtigen und zeitsparenden Zylinder vergleichenden Prüfmethoden, bei denen eine Unterdrückung der Zündung je Zylinder oder die Unterdrückung der Einspritzung je Zylinder vorzunehmen ist, auch bei modernen Motoren mit entsprechenden elektronischen Motorsteuerungen durchgeführt werden kann. Dabei ist nur ein geringer Programmcodeaufwand im Steuergerät bzw. im Testgerät von Nöten. Der eigentliche Prüfablauf wird vorteilhafter Weise allein im Steuergerät implementiert.

## Patentansprüche

1. Verfahren zur Zylinder vergleichenden Prüfung von Einspritz-Verbrennungsmotoren, insbesondere Kraftfahrzeugmotoren, bei denen der Motor von einer elektronischen Motorsteuerung (4) gesteuert wird, die mit Eigendiagnosemitteln und einer Anschlussschnittstelle (3), über welche die Motorsteuerung (4) an ein externes Testgerät anschließbar ist, versehen ist, **dadurch gekennzeichnet, dass** eine Einspritz-Unterdrückung durchgeführt wird und daß ein Drehzahlabfall gemessen und angezeigt wird, so dass daraus auf einen möglichen Leistungsabfall des jeweiligen Zylinders schließbar ist.

2. Verfahren nach Anspruch 1, **dadurch gekennzeichnet, dass** auch bei Zundungsunterdrückung aus dem gemessenen und anzeigbaren jeweiligen Drehzahlabfall des jeweiligen Zylinders auf einen möglichen Leistungsabfall des jeweiligen Zylinders schließbar ist.

3. Verfahren nach Anspruch 1 oder 2, **dadurch gekennzeichnet, dass** auch aus den gespeicherten, auslesbaren und anzeigbaren Einspritz-Korrekturwerten jedes Zylinders auf einen möglichen Leistungsabfall des jeweiligen Zylinders schließbar ist.

4. Verfahren nach Anspruch 1 oder 2, **dadurch gekennzeichnet, daß** bei dem gemessenen und anzeigbaren jeweiligen Drehzahlabfall bei Zündungs- bzw. Einspritz-Unterdückung des jeweiligen Zylinders die Prüfung vom Testgerät (1) her gestartet wird und der Motorsteuerung (4) über die Anschlußschnittstelle(3) nachfolgende Schritte als Vorgaben vorgegeben wird:
a. Einhaltung einer bestimmten Bezugsdrehzahl,
b. Einhaltung gleicher Einspritzmengen je Zylinder,
c. Einhaltung gleicher Zündparameter, wie insbesonders gleiche Zündzeitpunkte und Zündwinkel,
d. Unterbrechung der Zündung bzw. Einspritzung an einem ersten Zylinder,
e. Aufhebung der Zünd- bzw. Einspritz-Unterbrechung an dem ersten Zylinder,
f. Wiederholung der Schritte d. und e. für alle weiteren Zylinder des Motors,
g. Beendigung des Prüfvorgangs,
und daraus im Testgerät der Drehzahlabfall jedes Zylinders gegenüber der Bezugsdrehzahl ermittelt und die Anzeige durch das Testgerät (1) vorgenommen wird.

5. Verfahren nach Anspruch 3, **dadurch gekennzeichnet, daß** bei Prüfung mittels der gespeicherten und angezeigten Einspritz-Korrekturwerte jedes Zylinders, diese Korrekturwerte vom Testgerät (1) über die Anschlußschnittstelle (3) aus der Motorsteuerung (4) ausgelesen und im Testgerät, gegebenenfalls nach Aufbereitung und Normierung auf eine geeignete Bezugsgröße, die Auswertung im Hinblick auf den Leistungsbeitrag jedes Zylinders erfolgt und die Anzeige durch das Testgerät (1) in geeigneter Form vorgenommen wird.

6. Verfahren zur Zylinder vergleichenden Prüfung von Einspritz-Verbrennungsmotoren, insbesondere Kraftfahrzeugmotoren, bei denen der Motor von einer elektronischen Motorsteuerung (4) gesteuert wird, die mit Eigendiagnosemitteln und einer Anschlussschnittstelle (3), über welche die Motorsteuerung an ein externes Testgerät (1) anschließbar ist, versehen ist, **dadurch gekennzeichnet, daß** eine Einspritz-Unterdrückung durchgeführt wird und daß der Anteil von unverbrannten Kohlenwasserstoffen gemessen und angezeigt wird, so dass daraus auf ein mögliches Defizit der Verbrennungsqualität des jeweiligen Zylinders schließbar ist.

7. Verfahren nach Anspruch 6, **dadurch gekennzeichnet, dass** auch bei Zündungsunterdrückung des jeweiligen Zylinders aus dem gemessenen und anzeigbaren jeweiligen Anteil von unverbrannten Kohlenwasserstoffen auf ein mögliches Defizit der Verbrennungsqualität des jeweiligen Zylinders schließbar ist.

8. Verfahren nach Anspruch 6 oder 7, **dadurch gekennzeichnet, daß** die Prüfung vom Testgerät (1) her gestartet wird und der Motorsteuerung (4) über die Anschlußschnittstelle (3) nachfolgende Schritte als Vorgaben vorgegeben wird:
a. Einhaltung einer bestimmten Bezugsdrehzahl,
b. Einhaltung gleicher Einspritzmengen je Zylinder,
c. Einhaltung gleicher Zündparameter, wie insbesonders gleiche Zündzeitpunkte und Zündwinkel,
d. Unterbrechung der Zündung bzw. Einspritzung an einem ersten Zylinder,
e. Aufhebung der Zünd- bzw. Einspritz-Unterbrechung an dem ersten Zylinder,
f. Wiederholung der Schritte d. und e. für alle weiteren Zylinder des Motors,
g. Beendigung des Prüfvorgangs, und daraus im Testgerät (1) der jeweilige Anteil von unverbrannten Kohlenwasserstoffen jedes Zylinders gegenüber einem Bezugswert ermittelt und die Anzeige durch das Testgerät (1) vorgenommen wird.

9. Verfahren nach Anspruch 8, **dadurch gekennzeichnet, daß** die Ermittlung des Anteils unverbrannter Kohlenwasserstoffe aus den Auspuffgasen oder durch Auswertung eines Signals der Lambdasonde erfolgt und die Zuordnung zu den einzelnen Zylindern im Testgerät vorgenommen wird.

10. Verfahren nach einem der vorigen Ansprüche, **dadurch gekennzeichnet**, das es durch entsprechenden Programmcode im Testgerät (1) und in der Motorsteuerung (4) realisiert ist.

11. Anordnung zur Durchführung des bzw. der Verfahren nach einem der vorigen Ansprüche, **dadurch gekennzeichnet, daß** ein entsprechend programmiertes Testgerät (1) vorgesehen ist, welches an die Anschlußschnittstelle (3) einer entsprechend programmierten elektronischen Motorsteuerung (4) anschließbar ist, und daß die Durchführung der Prüfverfahren vom Testgerät (1) her einleit- und startbar ist.

## Claims

1. Cylinder comparison testing method for internal combustion engines with injection, in particular motor vehicle engines, in which the engine is controlled by an electronic engine controller (4) which is provided with self-diagnostic means and a connecting interface (3) by means of which the engine controller (4) can be connected to an external test unit, **characterized in that** an injection suppression process is carried out and **in that** a speed drop is measured and displayed, so that it is possible from this to infer a possible power drop of the respective cylinder.

2. Method according to Claim 1, **characterized in that** it is also possible during ignition suppression to infer a possible power drop of the respective cylinder from the measured and displayable respective speed drop of the respective cylinder.

3. Method according to Claim 1 or 2, **characterized in that** it is also possible to infer a possible power drop of the respective cylinder from the stored, readable and displayable injection correction values of each cylinder.

4. Method according to Claim 1 or 2, **characterized in that**, in the event of the measured and displayable respective speed drop during ignition or injection suppression of the respective cylinder, the test is started by the test unit (1) and the following steps are output by the engine controller (4) as demands via the connecting interface (3):
a. adherence to a certain reference speed,
b. adherence to the same injection quantities per cylinder,
c. adherence to the same ignition parameters, such as in particular the same ignition times and ignition angles,
d. interruption of the ignition or injection at a first cylinder,
e. resumption of the ignition or injection at the first cylinder,
f. repetition of steps d. and e. for all further cylinders of the engine,
g. ending of the test process,
and from this, the speed drop of each cylinder relative to the reference speed is determined in the test unit, and the test unit (1) outputs the display.

5. Method according to Claim 3, **characterized in that**, during a check by means of the stored and displayed injection correction values of each cylinder, said correction values are read out from the engine controller (4) by the test unit (1) via the connecting interface (3) and, if appropriate after processing and normalization to a suitable reference variable, the evaluation regarding the power contribution of each cylinder is carried out in the test unit, and the test unit (1) outputs the display in a suitable form.

6. Cylinder comparison testing method for internal combustion engines with injection, in particular motor vehicle engines, in which the engine is controlled by an electronic engine controller (4) which is provided with self-diagnostic means and a connecting interface (3) by means of which the engine controller can be connected to an external test unit (1), **characterized in that** an injection suppression process is carried out and **in that** the proportion of unburned hydrocarbons is measured and displayed, so that it is possible from this to infer a possible deficit in the combustion quality of the respective cylinder.

7. Method according to Claim 6, **characterized in that** it is also possible during ignition suppression of the respective cylinder to infer a possible deficit in the combustion quality of the respective cylinder from the measured and displayable respective proportion of unburned hydrocarbons.

8. Method according to Claim 6 or 7, **characterized in that** the test is started by the test unit (1) and the following steps are output by the engine controller (4) as demands via the connecting interface (3):
a. adherence to a certain reference speed,
b. adherence to the same injection quantities per cylinder,
c. adherence to the same ignition parameters, such as in particular the same ignition times and ignition angles,
d. interruption of the ignition or injection at a first cylinder,
e. resumption of the ignition or injection at the first cylinder,
f. repetition of steps d. and e. for all further cylinders of the engine,
g. ending of the test process, and from this, the respective proportion of unburned hydrocarbons of each cylinder relative to a reference value is determined in the test unit (1), and the test unit (1) outputs the display.

9. Method according to Claim 8, **characterized in that** the proportion of unburned hydrocarbons is determined from the exhaust gases or by evaluating a signal from the lambda probe, and the allocation to the individual cylinders is carried out in the test unit.

10. Method according to one of the preceding claims, **characterized in that** said method is implemented by means of corresponding program code in the test unit (1) and in the engine controller (4).

11. Arrangement for carrying out the method(s) according to one of the preceding claims, **characterized in that** a correspondingly programmed test unit (1), which can be connected to the connecting interface (3) of a correspondingly programmed electronic engine controller (4), is provided, and **in that** the execution of the testing method can be initiated and started by the test unit (1).

## Revendications

1. Procédé de contrôle par comparaison de cylindres de moteurs à combustion interne à injection, en particulier de moteurs de véhicule automobile, dans lesquels le moteur est commandé par une commande de moteur électronique (4) munie de moyens d'autodiagnostic et d'une interface de raccordement (3) permettant de raccorder la commande de moteur (4) à un appareil de test externe,
**caractérisé en ce qu'**
on effectue une suppression d'injection et on mesure et on affiche une baisse de régime, de manière à en déduire une baisse de puissance possible du cylindre respectif.

2. Procédé selon la revendication 1,
**caractérisé en ce que**
même lorsqu'on supprime l'allumage, on conclut une baisse de puissance possible du cylindre respectif à partir de la baisse de régime mesurée et affichée respective du cylindre concerné.

3. Procédé selon la revendication 1 ou 2,
**caractérisé en ce qu'**
on conclut une baisse de puissance possible du cylindre respectif également à partir des valeurs de correction d'injection stockées, lisibles et affichables.

4. Procédé selon la revendication 1 ou 2,
**caractérisé en ce que**
lors de la baisse de régime respective mesurée et affichable, en cas de suppression de l'allumage ou de l'injection du cylindre respectif, le contrôle est déclenché depuis l'appareil de test (1), et la commande de moteur (4) reçoit par l'interface de raccordement (3) les étapes suivantes sous forme de consignes :
a. respect d'un régime de référence déterminé,
b. respect des mêmes quantités d'injection pour chaque cylindre,
c. respect des mêmes paramètres d'allumage, comme en particulier des instants d'allumage et angles d'allumage identiques,
d. interruption de l'allumage ou de l'injection sur un premier cylindre,
e. annulation de l'interruption d'allumage ou d'injection sur le premier cylindre,
f. répétition des étapes d. et e. pour tous les autres cylindres du moteur,
g. fin du processus de contrôle,
et, dans l'appareil de test, la baisse de régime de chaque cylindre par rapport au régime de référence est ainsi déterminée, et l'affichage est effectué par l'appareil de test (1).

5. Procédé selon la revendication 3,
**caractérisé en ce que**
lors du contrôle au moyen des valeurs de correction d'injection stockées et affichées de chaque cylindre, ces valeurs de correction sont lues par l'appareil de test (1) par l'interface de raccordement (3) à partir de la commande de moteur (4), et dans l'appareil de test, le cas échéant après préparation et normalisation sur une grandeur de référence appropriée, on effectue l'évaluation de la contribution de puissance de chaque cylindre, et l'affichage est assuré par l'appareil test (1) sous une forme appropriée.

6. Procédé de contrôle par comparaison de cylindres de moteurs à combustion interne à injection, en particulier de moteurs de véhicule automobile, dans lesquels le moteur est commandé par une commande de moteur électronique (4) munie de moyens d'autodiagnostic et d'une interface de raccordement (3) permettant de raccorder la commande de moteur (4) à un appareil de test externe (1),
**caractérisé en ce qu'**
on effectue une suppression d'injection et on mesure et on affiche la proportion d'hydrocarbures imbrûlés, de manière à en déduire un déficit possible de la qualité de combustion du cylindre respectif.

7. Procédé selon la revendication 6,
**caractérisé en ce que**
même lorsque l'on supprime l'allumage du cylindre respectif, on conclut un déficit possible de la qualité de combustion du cylindre respectif, à partir de la proportion respective mesurée et affichable d'hydrocarbures imbrûlés.

8. Procédé selon la revendication 6 ou 7,
**caractérisé en ce que**
le contrôle est déclenché depuis l'appareil de test (1) et la commande de moteur (4) reçoit par l'interface de raccordement (3) les étapes suivantes sous forme de consignes :
a. respect d'un régime de référence déterminé,
b. respect des mêmes quantités d'injection pour chaque cylindre,
c. respect des mêmes paramètres d'allumage, comme en particulier des instants d'allumage et angles d'allumage identiques,
d. interruption de l'allumage ou de l'injection sur un premier cylindre,
e. annulation de l'interruption d'allumage ou d'injection sur le premier cylindre,
f. répétition des étapes d. et e. pour tous les autres cylindres du moteur,
g. fin du processus de contrôle et, dans l'appareil de test (1), la proportion respective d'hydrocarbures imbrûlés de chaque cylindre par rapport à une valeur de référence est déterminée, et l'affichage est effectué par l'appareil de test (1).

9. Procédé selon la revendication 8,
**caractérisé en ce qu'**
on détermine la proportion d'hydrocarbures imbrûlés à partir des gaz d'échappement ou par évaluation d'un signal de la sonde lambda, et l'affectation aux différents cylindres est effectuée dans l'appareil de test.

10. Procédé selon l'une quelconque des revendications précédentes,
**caractérisé en ce qu'**
il est réalisé par un code de programme correspondant dans l'appareil de test (1) et dans la commande de moteur (4).

11. Dispositif pour la mise en oeuvre du ou des procédés selon l'une quelconque des revendications précédentes,
**caractérisé en ce qu'**
un appareil de test (1) programmé de façon appropriée peut être raccordé à l'interface de raccordement (3) d'une commande de moteur électronique (4) programmée de façon correspondante, et la mise en oeuvre des procédés de contrôle peut être initiée et déclenchée depuis l'appareil de test (1).
